# EUROPEAN PATENT SPECIFICATION

(11) **EP 1 404 505 B1**
(45) Date of publication and mention of the grant of the patent: **03.05.2006**
(21) Application number: 02776574.2
(22) Date of filing: 03.06.2002
(51) Int. Cl.: B29C 49/36, B29C 33/36

(54) **METHOD OF MOLDING THERMOPLASTIC PARTS USING A TURRET CARRYING MOULD ASSEMBLIES**
VERFAHREN ZUM FORMEN THERMOPLASTISCHER TEILE UNTER VERWENDUNG EINES FORMWERKZEUGANORDNUNGEN TRAGENDEN REVOLVERKOPFS
PROCEDE DE MOULAGE DE PIECES THERMOPLASTIQUES FAISANT APPEL A UNE TOURELLE DE TRANSPORT D'ENSEMBLES MOULES

(30) Priority: 01.06.2001 US 295112 P
(43) Date of publication of application: 07.04.2004
(73) Proprietor: Meridian Automotive Systems, Inc., Dearborn, MI 48126 (US)
(72) Inventor: VAN MANEN, Dick, T., Canandaigua, NY 14424 (US)
(74) Representative: Schäfer, Matthias W.
(86) International application number: PCT/US2002/017469
(87) International publication number: WO 2002/098630

(56) References cited:
- EP-A- 0 423 405
- GB-A- 1 395 727
- GB-A- 2 225 274
- US-A- 3 969 059
- PATENT ABSTRACTS OF JAPAN vol. 014, no. 237 (M-0976), 21 May 1990 (1990-05-21) & JP 02 063720 A (KYORAKU CO LTD), 5 March 1990 (1990-03-05)
- PATENT ABSTRACTS OF JAPAN vol. 010, no. 261 (M-514), 5 September 1986 (1986-09-05) & JP 61 086235 A (KYORAKU CO LTD), 1 May 1986 (1986-05-01)

## Description

### BACKGROUND OF THE INVENTION

The present invention relates to a method of manufacturing thermoplastic panels for use in automobiles and other applications.

Various types of automotive panels, including interior panels such as rear shelf panels, inner door panels, etc., are usually either molded in a single layer with ribs or are assembled to a second layer to gain structural strength and/or acoustic properties desired. For interior trim panels, typical layers may include a relatively rigid panel for strength, a decorative layer (with a carpeting, fabric or vinyl exposed surface), a core panel of foam or other light weight construction to help with rigidizing and/or soundproofing, a back panel for added sound-proofing, and a barrier sandwich.

These panels are typically formed by injection molding a thermoplastic material directly into a mold or by sheet molding, which comprises inserting previously-manufactured sheeting of thermoplastic material into a mold. The mold also can contain one or more layers of other laminate materials, such as a decorative layer. The molds are typically mounted so that they translate only along one axis, to move to an open and closed position. Once the sheeting of material are placed in the mold the mold is then closed, distributing the thermoplastic material throughout the contours of the cavity, and thus forming the panel. Where additional layers are included, they are typically laminated to the thermoplastic material as part of the molding process.

Alternatively, as described in the present invention, such panels could be manufactured using a blow-molding or vacuum forming process. In blow-molding processes, a thermoplastic form, called a parison, is typically placed in the mold, the mold closed, and then air or some other gaseous medium is injected into the parison by the use of nozzles that have been inserted into the parison. The formed part then cools in the mold, and maintains the shape of the mold once the die halves are retracted and the part removed.

An example of a state of the art blow moulding method and apparatus is described in US 3,969,059 A wherein a multiple mould turret carries clam type moulds that close, in rotation of a rotating frame, around a tube shaped parison delivered from a thermoplastic material delivery station vertically downward. This method and apparatus is, however, unsuited to process flat parisons or combine a flat parison with a rigidifying insert.Vacuum forming, similarly, uses ports formed in the mold to exhaust the air and draw plastic into the contours of the mold cavity. As with other molding processes, however, the die halves used in blow molding or vacuum forming are typically mounted to that they translate only along one axis, to move to an open and closed position.

With each of these types of molding processes, a recurring problem is how to transport materials into the mold in an economical and efficient manner, including not only the thermoplastic material used in molding, but also additional layers such as decorative layers and rigidizing or soundproofing layers. Moreover, in a typical molding process, the mold is placed at or near the thermoplastic material delivery components. Thus, the thermoplastic delivery stations must deliver thermoplastic material only intermittently, sitting idle while the mold is going through a cooling cycle. It is therefore an object of this invention to provide for economical and efficient transport of materials into the mold and to reduce idle time for thermoplastic delivery stations in a molding process.

Furthermore, adequate distribution of thermoplastic material throughout the mold is essential for a good quality automotive panel. This could present particular problems for blow-molding processes, as the path to the contours of the mold cavity may be obstructed by laminating layers, such as a decorative layers, foam cores, etc. and can cause significant wrinkling in the product as it is formed.

It is an object of this invention, therefore, to provide a process that provides good distribution of thermoplastic material through a mold cavity without wrinkling of the product. This problem is solved by the method of claim 1. Preferred embodiments are defined in the dependent claims 2 to 21.

With the method of the present invention, parts are made in molds which are mounted on a frame which slowly rotates under one or more of extrusion dies or other thermoplastic sheet delivery components that deliver hot sheet to the open tools.

Prior to sheet delivery, the tool forming the desired top appearance of the part may have covering material such as carpet inserted in it, and the bottom tool may have any desired fastening brackets and adhesively compatible sound absorber or barrier material inserted in it.

After sheet delivery any desired compatible core insert may be placed in either tool, before or after blow molding or vacuum forming (if chosen) but before the molds hinge closed and are clamped.

Forming may be aided by closing on an inserted core or by applying a blowing pressure through a nozzle which penetrates to the inside of the part or by vacuum forming. After further rotation and cooling to rigidize the part, the mold clamping means is released and they are again opened flat to allow part removal and repeating of the cycle.

### BRIEF DESCRIPTION OF THE DRAWINGS

FIG. 1 is a top view of a preferred embodiment of the thermoplastic molding system of the present invention.
FIG. 2 is a side view of a preferred embodiment of the thermoplastic molding system of the present invention.

### DESCRIPTION OF THE PREFERRED EMBODIMENT

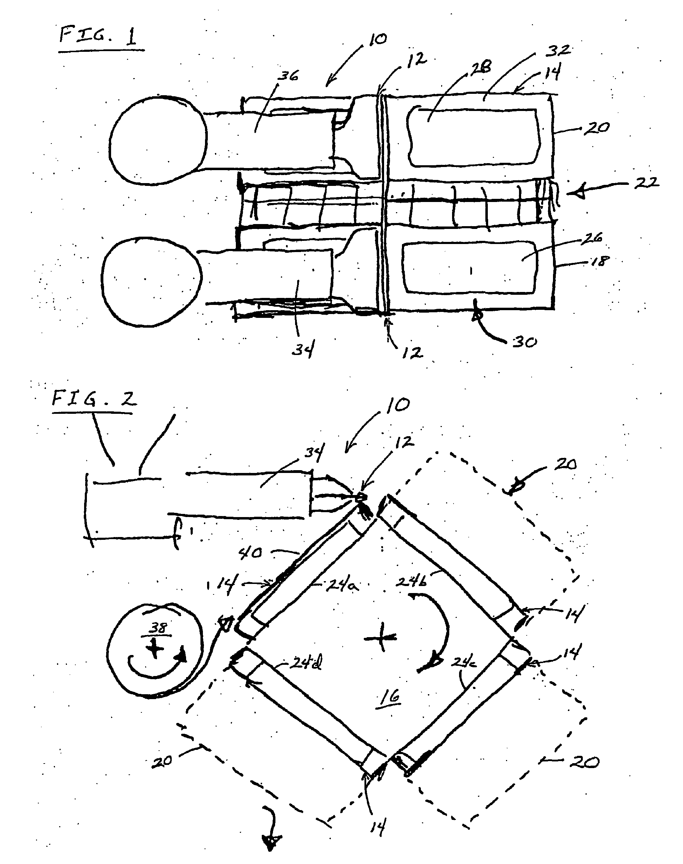

As shown in FIG. 2, the thermoplastic molding system 10 of the present invention comprises one or more thermoplastic material delivery stations 12, two or more hinged clam shell molds 14 mounted on rotating frame 16. Each clam shell mold 14, shown in more detail in FIG. 1, is composed of a mounted die half 18 and a hinged die half 20 that are connected by hinge 22. Hinge 22 may or may not be exposed. The mounted die half 18 of each clam shell mold 14 is affixed at each station 24a, b, c or d on rotating frame 16.

The hinged die half 20 of clam shell mold 14 hinges from an open position, as show in FIG. 1, to a closed position on the mounted die half 18 of clam shell mold 14. The dashed line in Fig. 2 shows the position of the hinged die half 20 in its closed position at stations 24b, 24c, and 24d. Both the mounted die half 18 and the hinged die half 20 of clam shell mold 14 have concave depressions 26, 28 in their inner faces 30, 32 such that they form a mold cavity when rotated to a closed position on hinge 22. In the open position, as shown in Fig. 1, the inner face 30 of mounted die half 18 and the inner face 32 of hinged die half 20 are approximately co-planar, and facing in the same direction.

The thermoplastic material delivery station 12 typically delivers hot sheets or sheeting of thermoplastic material to die halves 18 and 20, when die halves 18 and 20 are in the open position, as shown in FIG. 1. In a preferred embodiment, the thermoplastic material delivery station 12 comprises two separate extruders 34 and 36, each extruder 34 and 36 delivering freshly extruded thermoplastic sheets or sheeting to a respective die half.

Optionally, thermoplastic molding system 10 also includes a decorative layer unroll station 38 which delivers a sheet of carpet or some other decorative layer 40 to one or more of the mold halves 18 and 20 prior to delivery of the thermoplastic sheet. The decorative layer 40 is typically positioned on the die half that forms the desired top appearance of the part. The die half that forms the bottom half of the part may have any desired fastening brackets and adhesively compatible sound absorber or barrier material inserted in it by similar means.

In operation, the frame 16 slowly rotates past one or more thermoplastic material delivery 12 components. When the clam shell mold 14 approaches the position shown as station 24a in FIG. 2, it is in an open position, the inner face 30 of mounted die half 18 and the inner face 32 of hinged die half 20 are approximately co-planar, and are facing in the same direction. Decorative layer unroll station 38 lays down a decorative layer over one or both die halves 18, 20 as the die halves move past the decorative layer unroll station 38 on the rotating frame 16.

As the clam shell mold 14 rotates by the thermoplastic material delivery component(s) 12, towards the position shown as station 24b, the clam shell mold 14 remains in an open position, and the thermoplastic material delivery component(s) 12 lay down a thermoplastic layer over one or more of die halves 18, 20. Once the clam shell mold rotates on frame 16 to the position shown as station 24b, a compatible core insert, if desired, can be placed on any material in either die half 18, 20. The core insert may placed from the front or back of the machine on a reciprocating rack with pins that hold the insert. The core insert can be made of any appropriate material, including structural foam, compatible thermoplastic foam, thermoplastic honeycomb core or soundproofing/acoustic foam. The core insert may also serve to assist with rigidizing the part.

Thereafter, when the clam shell mold 14 has rotated past the thermoplastic material delivery station, the hinged die half 20 rotates on hinge 22 to a closed position on the mounted die half 18 and is clamped by any conventional means. Decorative layer 40 and the thermoplastic sheets may be cut by any conventional means, including by sharp edges on the inner faces 30 and 32 of die halves 18 and 20, by heat applied at the appropriate point on the die halves.

If desired, where multiple layers of thermoplastic material are used, the multiple layers can be perimeter sealed to form an interior bladder as the hinged die half 20 rotates to the closed position on mounted die half 18 and nozzles can be inserted between the layers of thermoplastic material to aid in forming the part. Where such nozzles are used, gaseous medium is introduced through the nozzles between layers of thermoplastic material once the clam shell mold 14 is in its closed position and has been clamped. Applying a gaseous medium through the nozzle(s) expands the bladder outward against the outer contour surfaces of the mold formed by the depressions 26, 28 in die halves 18, 20. Alternatively, if desired, vacuum forming can be used to assist in forming the part by placing ports within the walls of the die halves.

The perimeter seal may be formed by pressing the thermoplastic material together and using the integral heat of the thermoplastic material to complete the seal. Alternatively, additional thermoplastic heating can be applied before or after the die halves 18, 20 close. Adhesives may also be applied before the die halves close to form the perimeter seal.

As the clam shell mold 14 rotates to the positions shown as station 24c and station 24d, the part cools, thus rigidizing in the shape of the depressions 26, 28 in die halves 18, 20. Once the clam shell mold 14 reaches the position shown as station 24d, any gaseous medium (in the case of blow molding) or vacuum (in the case of vacuum forming) is released, the hinged die half 20 is undamped and rotated on hinge 22 to the open position, and the formed part removed.

In the preferred embodiment, thermoplastic material delivery station 12 is comprised of two extruders and a die. Optionally, the thermoplastic material may be calendared through two hot rollers producing sheets, and through additional hot rollers to produce the desired thickness. Thus, the thermoplastic material can be formed into a part, along with any additional layers or inserted cores, by any molding means, including blow molding, vacuum forming, or sheet molding. Alternatively, the thermoplastic material delivery station 12 can comprise a single extruder delivering a single, much wider sheet over both die halves at the same time to perform these same molding processes.

In addition, top and bottom materials being extruded may be different grades of thermoplastic and different filler levels for achieving best part performance and economics. If the different materials are not compatible for thermoplastic bonding with their own heat, a bonding adhesive may be applied to the intended bond surface before molds are closed.

Alternatively, the thermoplastic material delivery station 12 can deliver other types of thermoplastic sheets, such as a heated flax/polypropylene moldable mat, as one or more thermoplastic layer(s) of part construction. Such flax/polypropylene mats are described in U.S. Patent No. 5,614,285. A flax/polypropylene mat may be delivered to both die halves, or to only one die half. Where blow molding is to be used, and only one flax/polypropylene mat is delivered, an extruded sheet delivered to the remaining die half and perimeter sealed to the flax/polypropylene mat to form the internal bladder. In the event that the flax/polypropylene mat is delivered to only one die half, it may be preferable to deliver the flax/polypropylene moldable mat to the mounted die half as on top of the carpet. Such choices are dependent solely upon the particular end-part properties desired.

Delivery of the flax/polypropylene introduction of the flax/polypropylene moldable mat may be performed by providing a roll unwind station, similar to decorative layer unroll station 38. As the material is being introduced into a mold, the flax/polypropylene moldable mat is heated by a set of hot plates or by contact with hot rollers just before the mold entry point.

The present invention is not limited to interior trim panels, but can be applied equally well to any other types of panels, such as other automotive panels and to non-automotive applications in the office furniture and building trade.

Although the preferred embodiment utilizes a clam shell mold construction, other shaped molds that can be used on a rotating frame may be without departing from the scope of this invention. Similarly, other rotating frames may be used, such as a turntable as opposed to a wheel, without departing from the scope of this invention.

Preferred embodiments of the present invention have been described herein. It is to be understood that modifications and changes can be made without departing from the true scope of the invention, as defined by the following claims,

## Claims

1. A method for blow-molding or vacuum form pressing panels in a thermoplastic molding system (10) comprised of a thermoplastic material delivery station (12), and two or more molds (14) mounted on a rotating frame (16), each mold (14) comprised of two die halves (18, 20) each having an inner face (30, 32), said die halves (18, 20) in a closed position forming a mold cavity, the method comprising the steps of
(a) rotating the rotating frame (16) to move the die halves (18, 20) in an open position past a thermoplastic material delivery station (12), wherein in said open position, the inner faces (30, 32) of the die halves (18, 20) are approximately co-planar;
(b) delivering an additional layer such as decorative, barrier or sound desorber material to at least one die half (18, 20);
(c) delivering thermoplastic material to at least one die half (18, 20) of a mold (14) at the thermoplastic material delivery station (12);
(d) moving the halves (18, 20) to a closed position as the mold has rotated past the thermoplastic material delivery station (12);
(e) cooling the mold (14) as it continues to rotate on the rotating frame; and
(f) moving the die halves (18, 20) to the open position and removing a part formed in the mold cavity before the mold rotates post the thermoplastic material delivery station (12).

2. The method of claim 1, wherein the at least two molds (14) are clam shell molds comprised of a mounted die half (18) and a hinged die half (20) connected by a hinge (22) directly or indirectly to the mounted die half (18).

3. The method of claim 1 or 2, wherein the thermoplastic material is delivered at the thermoplastic material delivery station (12) in sheet form.

4. The method of claims 1, 2 or 3, wherein the thermoplastic material delivery station (12) comprises one or more extruders (34, 36).

5. The method of claim 3, wherein the thermoplastic material delivery station (12) also comprises two or more calendaring rollers.

6. The method of claims 1 or 2, wherein the thermoplastic material is a flax/polypropylene sheet.

7. The method of claim 6 where the decorative material is delivered to the die half which forms a top side of the part formed.

8. The method of claim 1 or 2, wherein the thermoplastic material is simultaneously delivered to both mold halves at the thermoplastic material delivery station (12).

9. The method of claim 3, wherein the thermoplastic material is delivered to both mold halves at the thermoplastic material delivery station (12).

10. The method of claim 9, further comprising the step of preparing the thermoplastic sheet at the thermoplastic sheet delivery station (12) by extruding and calendaring the thermoplastic material.

11. The method of claim 9, further comprising the step of inserting a rigidizing core material on one of the mold halves (18, 20) after the thermoplastic material is delivered.

12. The method of claim 11, wherein the rigidizing core material is structural foam.

13. The method of claim 11, wherein the rigidizing core material is compatible thermoplastic foam.

14. The method of claim 11, wherein the rigidizing core material is thermoplastic honeycomb core.

15. The method of claim 11, wherein the rigidizing core material is soundproofing/acoustic foam.

16. The method of claim 9, wherein the thermoplastic material delivered to both mold halves at the thermoplastic material delivery station is a single sheet of thermoplastic material.

17. The method of claim 9, wherein the thermoplastic material delivered to both mold halves is comprised of the same thermoplastic material.

18. The method of claim 9, wherein the thermoplastic material delivered to both mold halves is comprised of different thermoplastic material.

19. The method of claim 9, further comprising the step of perimeter sealing the thermoplastic material delivered to both mold halves (18, 20) by thermoplastic heating once the mold halves are in the closed position to form an internal bladder.

20. The method of claim 9, further comprising the step of perimeter sealing the thermoplastic material delivered to both mold halves by adhesive once the mold halves are in the closed position to form an internal bladder.

21. The methods of claim 19 or 20, further comprising the step of placing one or more nozzles between the layers of thermoplastic material and introducing a gaseous medium to conform the part to the mold cavity.

## Patentansprüche

1. Verfahren zum Blasformen oder Vakuum-Formpressen von Paneelen in einem thermoplastischen Formsystem (10), bestehend aus einer Zuführstation (12) thermoplastischen Materials und zwei oder mehreren Formen (14), die auf einem Drehrahmen (16) montiert sind, wobei sich jede Form (14) aus zwei Matrizenhälften (18,20) zusammensetzt, von denen jede eine Innenfläche (30,32) aufweist, und wobei die Matrizenhälften (18,20) in einer geschlossenen Position einen Formhohlraum bilden, und wobei das Verfahren die folgenden Schritte aufweist:
a) Drehen des Drehrahmens (16), um die Formhälften (18,20) in eine offene Position jenseits einer Zuführstation (12) thermoplastischen Materials zu bewegen, wobei in der offenen Position die Innenflächen (30,32) der Matrizenhälften (18,20) annähernd co-planar sind;
b) Zuführen einer zusätzlichen Schicht beispielsweise von dekorativem, festigendem oder schallabsorbierendem Material zu wenigstens einer Matrizenhälfte (18,20);
c) Zuführen thermoplastischen Materials zu wenigstens einer Matrizenhälfte (18,20) einer Form (14) in der Zuführstation (12) thermoplastischen Materials;
d) Bewegen der Hälften (18,20) in eine geschlossene Position, sobald sich die Form längs der Zuführstation (12) thermoplastischen Materials gedreht hat;
e) Kühlen der Form (14) solange sie auf dem Drehrahmen rotiert; und
f) Bewegen der Matrizenhälften (18,20) in die offene Position und Entfernen eines in der Formhöhlung geformten Teils, bevor die Form hinter die Zuführstation (12) thermoplastischen Materials dreht.

2. Verfahren nach Patentanspruch 1, wobei die wenigstens zwei Formen (14) muschelschalenförmig ausgebildet sind, die sich zusammensetzen aus einer eingehängten Matrizenhälfte (18) und einer gelenkigen Matrizenhälfte (20), die mittels eines Scharniers (22) direkt oder indirekt mit der eingehängten Matrizenhälfte (18) verbunden ist.

3. Verfahren nach Patentanspruch 1 oder 2, wobei das thermoplastische Material in der Zuführstation (12) thermoplastischen Materials in Blattform zugeführt wird.

4. Verfahren nach Patentanspruch 1, 2 oder 3, wobei die Zuführstation (12) thermoplastischen Materials einen oder mehrere Extruder (34, 36) aufweist.

5. Verfahren nach Patentanspruch 3, wobei die Zuführstation thermoplastischen Materials auch zwei oder mehrere Kalandrierrollen enthält.

6. Verfahren nach den Patentansprüchen 1 oder 2, wobei das thermoplastische Material ein Flachs/Polypropylen-Blatt ist.

7. Verfahren nach Patentanspruch 6, wobei das dekorative Material zur Matrizenhälfte zugeführt wird, die eine Oberseite des geformten Teils bildet.

8. Verfahren nach Patentanspruch 1 oder 2, wobei das thermoplastische Material simultan an beide Formhälften in der Zuführstation (12) thermoplastischen Materials zugeführt wird.

9. Verfahren nach Patentanspruch 3, wobei das thermoplastische Material an beide Matrizenhälften in der Zuführstation (12) thermoplastischen Materials zugeführt wird.

10. Verfahren nach Patentanspruch 9, des weiteren umfassend den Schritt des Vorbereitens des thermoplastischen Blatts in der Zuführstation (12) thermoplastischer Folien durch Extrudieren und Glätten des thermoplastischen Materials.

11. Verfahren nach Patentanspruch 9, des weiteren umfassend den Schritt des Einfügens eines verstärkenden Kernmaterials auf eine der Matrizenhälften (18,20) nach dem Zuführen des thermoplastischen Materials.

12. Verfahren nach Patentanspruch 11, wobei das verstärkende Kernmaterial ein struktureller Schaumstoff ist.

13. Verfahren nach Patentanspruch 11, wobei das verstärkende Kernmaterial ein kompatibler thermoplastischer Schaumstoff ist.

14. Verfahren nach Patentanspruch 11, wobei das verstärkende Kernmaterial ein thermoplastischer Honigwaben-Kern ist.

15. Verfahren nach Patentanspruch 11, wobei das verstärkende Kernmaterial ein schalldichter/akustischer Schaumstoff ist.

16. Verfahren nach Patentanspruch 9, wobei das zu beiden Matrizenhälften gelieferte thermoplastische Material ein einzelnes Blatt thermoplastischen Materials ist.

17. Verfahren nach Patentanspruch 9, wobei das zu beiden Matrizenhälften gelieferte thermoplastische Material sich aus demselben thermoplastischen Material zusammensetzt.

18. Verfahren nach Patentanspruch 9, wobei sich das zu beiden Matrizenhälften gelieferte thermoplastische Material aus verschiedenem thermoplastischen Material zusammensetzt.

19. Verfahren nach Patentanspruch 9, umfassend den Schritt der Umfangsversiegelung des an beide Matrizenhälften (18,20) gelieferten thermoplastischen Materials durch thermoplastisches Erhitzen, sobald die Gusshälften sich in der geschlossenen Position zum Formen einer Innenblase befinden.

20. Verfahren nach Patentanspruch 9, des weiteren umfassend den Schritt der Umfangsversieglung des an beide Matrizenhälften gelieferten thermoplastischen Materials durch Klebemittel, sobald sich die Matrizenhälften in der geschlossenen Form zum Formen einer Innenblase befinden.

21. Verfahren nach den Patentansprüchen 19 oder 20, des weiteren umfassend den Schritt des Platzierens einer oder mehrere Düsen zwischen den Lagen des thermoplastischen Materials und Einführen eines gasförmigen Mediums zum Anpassen des Teils an den Gusshohlraum.

## Revendications

1. Procédé de fabrication de panneaux par moulage par soufflage ou pressage sous vide dans un système de moulage thermoplastique (10) comprenant une station de sortie de matériau thermoplastique (12) et deux moules ou plus (14) montés sur un cadre pivotant (16), chaque moule (14) comprenant deux demi-matrices (18, 20), chaque moitié présentant une face interne (30, 32), les demi-matrices précitées (18, 20) en position fermée présentant une cavité de moulage, le procédé comprenant les étapes de
(a) rotation du cadre pivotant (16) afin de placer les demi-matrices (18, 20) en position ouverte au-delà d'une station de sortie de matériau thermoplastique (12), où, dans la position ouverte précitée, les faces internes (30, 32) des demi-matrices (18, 20) sont approximativement coplanaires ;
(b) dépôt sur au moins une demi-matrice (18, 20) d'une couche supplémentaire composée de matériau décoratif ou d'un matériau destiné à bloquer ou absorber le son ;
(c) dépôt d'un matériau thermoplastique sur au moins une demi-matrice (18, 20) d'un moule (14) de la station de sortie de matériau thermoplastique (12) ;
(d) placement des demi-matrices (18, 20) en position fermée tandis que le moule a pivoté au-delà de la station de sortie de matériau thermoplastique (12) ;
(e) refroidissement du moule (14) tandis qu'il continue à pivoter sur le cadre pivotant (16) ;
(f) et placement des demi-matrices (18, 20) en position ouverte et retrait d'une pièce formée par la cavité de moulage avant que le moule ne pivote au-delà de la station de sortie de matériau thermoplastique (12).

2. Procédé, tel qu'il est décrit dans la revendication 1, où les moules - qui sont au nombre de deux minimum - sont des moules à double coque comprenant une demi-matrice fixée (18) et une demi-matrice articulée (20) connectées par une charnière (22) directement ou indirectement fixée sur la demi-matrice (18).

3. Procédé, tel qu'il est décrit dans les revendications 1 ou 2, où le matériau thermoplastique arrive à la station de sortie de matériau thermoplastique (12) sous forme de feuilles.

4. Procédé, tel qu'il est décrit dans les revendications 1, 2 ou 3, où la station de sortie de matériau thermoplastique (12) comprend une ou plusieurs extrudeuses (34, 36).

5. Procédé, tel qu'il est décrit dans la revendication 3, où la station de sortie de matériau thermoplastique (12) comprend également deux ou plusieurs rouleaux à calendrer.

6. Procédé, tel qu'il est décrit dans les revendications 1 ou 2, où le matériau thermoplastique est une feuille de lin / polypropylène.

7. Procédé, tel qu'il est décrit dans la revendication 6, où le matériau décoratif est placé sur la demi-matrice qui forme la face supérieure de la pièce formée.

8. Procédé, tel qu'il est décrit dans les revendications 1 ou 2, où le matériau thermoplastique est déposé simultanément sur les deux demi-matrices sur la station de sortie de matériau thermoplastique (12).

9. Procédé, tel qu'il est décrit dans la revendication 3, où le matériau thermoplastique est déposé sur les deux demi-matrices sur la station de sortie de matériau thermoplastique (12).

10. Procédé, tel qu'il est décrit dans la revendication 9, comprenant en outre l'étape de préparation de la feuille thermoplastique à la station de sortie de matériau thermoplastique (12), le matériau thermoplastique étant extrudé et calendré.

11. Procédé, tel qu'il est décrit dans la revendication 9, comprenant en outre l'étape d'insertion d'un matériau d'âme rigidifiant sur l'une des demi-matrices (18, 20).

12. Procédé, tel qu'il est décrit dans la revendication 11, où le matériau d'âme rigidifiant est une mousse structurée.

13. Procédé, tel qu'il est décrit dans la revendication 11, où le matériau d'âme rigidifiant est une mousse thermoplastique compatible.

14. Procédé, tel qu'il est décrit dans la revendication 11, où le matériau d'âme rigidifiant est une âme en nid d'abeille thermoplastique.

15. Procédé, tel qu'il est décrit dans la revendication 11, où le matériau d'âme rigidifiant est une mousse insonorisante / acoustique.

16. Procédé, tel qu'il est décrit dans la revendication 9, où le matériau thermoplastique déposé sur les deux demi-matrices à la station de sortie du matériau thermoplastique est une feuille unique de matériau thermoplastique.

17. Procédé, tel qu'il est décrit dans la revendication 9, où le matériau thermoplastique déposé sur les deux demi-matrices se compose du même matériau thermoplastique.

18. Procédé, tel qu'il est décrit dans la revendication 9, où le matériau thermoplastique déposé sur les deux demi-matrices se compose de différents matériaux thermoplastiques.

19. Procédé, tel qu'il est décrit dans la revendication 9, comprenant en outre l'étape consistant à sceller au périmètre le matériau thermoplastique déposé sur les deux demi-matrices (18, 20) en chauffant le matériau thermoplastique lorsque les deux demi-matrices ont été placées en position fermée pour obtenir une vessie interne.

20. Procédé, tel qu'il est décrit dans la revendication 9, comprenant en outre l'étape consistant à sceller au périmètre le matériau thermoplastique déposé sur les deux demi-matrices avec de l'adhésif lorsque les deux demi-matrices ont été placées en position fermée pour obtenir une vessie interne.

21. Procédé, tel qu'il est décrit dans les revendications 18 ou 20, comprenant en outre le procédé consistant à placer une ou plusieurs buses d'injection entre les différentes couches de matériau thermoplastique et à injecter un médium gazeux pour enrober la partie de la cavité de moulage.
